# EUROPEAN PATENT SPECIFICATION

(11) **EP 3 438 958 B1**
(45) Date of publication and mention of the grant of the patent: **10.03.2021**
(21) Application number: 17020325.1
(22) Date of filing: 31.07.2017
(51) Int. Cl.: G09F 19/12, G09F 19/14

(54) **MULTI-IMAGE DISPLAY STRUCTURES AND KITS**
MEHRFACHBILDANZEIGESTRUKTUREN UND -KITS
DES STRUCTURES D'AFFICHAGE MULTI-IMAGE ET KITS

(43) Date of publication of application: 06.02.2019
(73) Proprietor: Hein, Oliver Karl, 80639 München (DE)
(72) Inventor: Hein, Oliver Karl, 80639 München (DE)

(56) References cited:
- WO-A1-2011/000545
- JP-A- 2002 268 598

## Description

### FIELD OF INVENTION

This invention relates to a multi-image display structure and a kit comprising substantially triangular optical prisms arranged in a cube-like shape, wherein multiple pictures and/or light-emitting displays may be provided in slots between inward-facing quadrangular surfaces of the optical prisms, wherein at least one slot is perpendicular to a side face of the cube-like shape.

The multi-image display structure may be used to display or exhibit a multiplicity of artworks, photographs, pictures and/or videos and enables switching between different images depending on the viewing angle of the observer.

### BACKGROUND OF THE INVENTION

Numerous display structures are known in the art for the purpose of presenting a multiplicity of still and/or moving images, such as advertising signs, photographs, artwork or videos.

A common design for advertising signs includes an assembly comprising multiple square or triangular shaped prisms that are rotatably mounted side-by-side in a frame. Each side of the prisms has a vertical strip of a poster or other image attached on them, and the rotation is synchronized so that all the strips for one image are shown at once to make up a complete image.

An alternative concept which aims at the presentation of multiple still and/or moving images on a single display surface while minimizing or avoiding mechanical or movable components are display structures which are capable of displaying different images or information on a single display surface depending on the viewing angle of the observer.

For example, JP 2004-333848 A discloses an image display for displaying new images by allowing screen information to be changed depending on the position of the observer without using mechanical or movable components.

US 8,893,413 B1 includes the integration of two complementary pictures/images thereon such that the viewing angle of the viewer determines the resulting picture.

JP 2002-268598 A discloses an image display apparatus in which not only different display images can be switched but an erect image and an inverted image can be both displayed at a time.

However, it would be desirable for a number of applications to provide a display structure which is capable of displaying still or moving images on multiple sides thereof. In this connection, WO 2011/000545 A1 discloses a double-sided display structure comprising a light transmitting element having a pair of opposed light receiving faces and a pair of opposed light emitting faces substantially orthogonally disposed to the light receiving faces, a light reflecting layer disposed at an oblique angle to the light receiving faces and the light emitting faces, and a pair of light-emitting displays for displaying the same or different still and/or moving images and being mounted such that an image from a respective light-emitting display is emitted into a respective light receiving face and is transmitted through the light transmitting element to be reflected by the reflecting layer to a respective light emitting face, whereby the images received at the pair of opposed light receiving faces are visible to observers through the pair of opposed light emitting faces of the display structure. Such a display structure allows enclosing the light-emitting displays within the mounting members so that when looking at one side of the display structure, an observer can only see the image reflected from the hypotenuse face of one of the prism without any visible means of the image generation.

Nevertheless, it may be desirable to provide a display structure and kit which is capable of displaying a large number of pictures and moving images on more than two faces and allows screen information to be changed depending on the viewing angle of the observer, without necessarily using movable components.

Also it still remains desirable to provide a multi-image display structure, which is up- and downscalable in a simple manner, inexpensive, enables excellent optical clarity even when manufactured at larger dimensions, exhibits a favourable visual appearance and may be simultaneously used under harsh environmental conditions and for a large number of purposes.

The present invention has been made in view of the above enumerated drawbacks and/or desires for improvements in the art.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

The present invention therefore seeks to provide a display structure which is capable of displaying a large number of the same or different still and/or moving images on more than two display faces, which is up- and downscalable in a simple manner, inexpensive, and exhibits excellent optical clarity and hence enables to provide a space-saving display structure having a favourable visual appearance.

For this purpose, one aspect of the present invention relates to a multi-image display structure comprising: a plurality of substantially triangular optical prisms arranged in a cube-like shape, the triangular prism surfaces being plane-parallel to the top and bottom surfaces of the cube-like shape; slots between inward-facing quadrangular surfaces of the optical prisms, wherein at least one slot is perpendicular to a side face of the cube-like shape; and one or more picture(s) and/or light-emitting display(s) independently provided in a plurality of said slots.

In preferred embodiments, the display structure is a four sided display structure; comprises 5 to 32, preferably 5 to 16, further preferably 8 substantially triangular optical prisms arranged in a cube-like shape. In another preferred aspect, the substantially triangular optical prisms are right-triangular prisms, wherein the hypotenuse faces of the right-triangular prisms are preferably positioned face-to-face in the prism arrangement. In a further preferred aspect, one or more picture(s) and/or light-emitting display(s) are provided in the perpendicular slot and preferably in all slots. Preferred pictures include a painting, an artwork or a photograph, and/or and preferred light-emitting displays include an LCD or OLED.

In another preferred aspect of the multi-image display structure, the prisms are comprised of a first light-transmitting material having a first refractive index and an optional fluid second light-transmitting material having a second refractive index, the difference between the first and second refractive indices being 0.12 or less, preferably 0.06 or less, further preferably 0.03 or less; wherein the slot(s) comprise(s) a third light-transmitting material having a third refractive index; and wherein the oblique angle between a reflective prism surface and the picture(s) and/or the light-emitting display(s), and the difference between the first and third refractive indices are sufficient to cause substantial reflection of the image originating from the picture(s) and/or the light-emitting display(s). Preferably, the first light-transmitting material is a solid, preferably a glass or a polymer, further preferably poly(methyl methacrylate); wherein the optional fluid second light-transmitting material is a liquid, preferably a mineral oil or glycerol, particularly preferably glycerol; and/or wherein the third light-transmitting material is a gas, preferably air.

In another preferred aspect, the multi-image display structure of the present invention comprises: the fluid second light-transmitting material in a tank formed of the first light-transmitting material; a volume compensation chamber, preferably on a non-display face of the cube-like shape, comprising second light-transmitting material in fluid communication with the second light-transmitting material in the tank. Further preferred is a volume compensation chamber comprising a cylindrical body; a piston movably mounted into the cylindrical body via a sealing ring; and an aperture plate.

The multi-image display structure of the present invention may further comprise one or more means selected from a light assembly arranged to illuminate the prism arrangement, a motor for rotatively moving the prism arrangement, and a heating/cooling element; and a power source electrically connected to said means. In addition, it may further comprise a transparent protective cover over the side faces of the cube-like shape and an optional, preferably opaque cover plate on the top and/or bottom faces.

A second aspect of the present invention relates to a kit for making a multi-image display structure, wherein the kit comprises: a plurality of substantially triangular optical prisms arranged in a cube-like shape, the triangular prism surfaces being plane-parallel to the top and bottom surfaces of the cube-like shape; slots configured as receptacles for pictures and/or a light-emitting displays between inward-facing quadrangular surfaces of the optical prisms, wherein at least one slot is perpendicular to a side face of the cube-like shape.

A third aspect of the present invention relates to an advertising sign comprising the display structure according to the first aspect or the kit according to the second aspect and an optional mounting stand.

In a fourth aspect, the present invention relates to a presentation or entertainment article comprising the display structure according to the first aspect or the kit according to the second aspect.

### BRIEF DESCRIPTION OF THE DRAWINGS

FIG. 1A illustrates an arrangement of five triangular prisms in a cube-like shape, with the slot perpendicular to the viewed side face being highlighted.
FIG. 1B shows an arrangement of seven triangular prisms in a cube-like shape.
FIG. 1C illustrates an arrangement of eight triangular prisms in a cube-like shape.
FIG. 2 shows a top view onto an exemplary prism arrangement and illustrates the pictures/displays viewed from the outside in dependence on the viewing angle.
FIGS. 3A to 3G illustrate the optical effects perceived by a stepwise rotation of the display structure.
FIG. 4 is schematic part-exploded perspective view of an exemplary display structure using solid first light-transmitting material.
FIG. 5 is schematic part-exploded perspective view of an exemplary display structure using liquid second light-transmitting material in a tank.
FIG. 6 shows an exemplary volume compensation chamber assembly.
FIGS. 7A and 7B show exemplary embodiments of advertising signs.

### DETAILED DESCRIPTION OF THE INVENTION

For a more complete understanding of the present invention, reference is now made to the following description of the illustrative embodiments thereof:

In a first embodiment, the present invention relates to a multi-image display structure comprising: a plurality of substantially triangular optical prisms arranged in a cube-like shape, the triangular prism surfaces being plane-parallel to the top and bottom surfaces of the cube-like shape; slots between inward-facing quadrangular surfaces of the optical prisms, wherein at least one slot is perpendicular to a side face of the cube-like shape; and one or more picture(s) and/or light-emitting display(s) independently provided in a plurality of said slots.

The wording "cube-like shape", as used herein, denotes a cube or cuboid shape which may have rounded edges.

The expression "optical prism", as used herein, denotes a transparent optical element with flat, light-reflective surfaces.

As used herein, the expression "triangular prism" refers to a shape corresponding substantially with a polyhedron made of a triangular base, a translated copy, and three faces joining corresponding sides, wherein the three faces are parallelograms. Said expression further encompasses non-truncated and truncated triangular prisms and triangular prisms with rounded edges. In a preferred embodiment, the triangular optical prisms have a right-angled triangular prism shape. Further preferably, the hypotenuse faces of the right-triangular prisms are arranged face-to-face.

The slots are configured as receptactles for picture(s) and/or light-emitting display(s) and typically represent substantially planar elements formed between a pair of walls (i.e. the rectangular inward-facing prism surfaces) of a solid, light transmitting material which may be sealed together at their periphery. In one embodiment, the slots may also be formed by affixing a spacer (e.g. a bar spacer; spacers with T-profiles between non-hypotenuse prism faces; and/or spacers with V-profiles between hypotenuse prism faces) between said pair of walls, which may help positioning the prisms or serve to connect the prismatic elements (via adhesion, for example). Multiple picture(s) and/or light-emitting display(s) may be provided in or inserted into each slot back-to-back. The thickness of the slots is not particularly limited and may be suitably selected depending on the picture or display to be inserted or encapsulated therein. However, a favourable visual appearance is realized with slot thicknesses of 10 mm or less, preferably 7 mm or less.

The pictures that may be employed in display structures of the present invention are not particularly limited and may include paintings, drawings, artworks, prints or photographs, printed or otherwise provided on paper, canvas, non-transparent or transparent plastic substrates, etc. The light-emitting displays are preferably similar to portable electronic displays of the well known type that display either still images, or moving images, which may be stored either in an internal memory of the device (in a video format, such as MP4, AVI, MOV, etc.), on an external memory and coupled via a wire or wirelessly to the device, or be stored on a storage medium, for example a DVD or CD ROM and played by the device. In a preferred embodiment, the devices are portable video players that can display either still or moving images, and can be programmed to change the images displayed either in a predetermined or in random sequence. The screens may be either liquid-crystal displays (LCD) or light-emitting devices (such as OLEDs) or any other suitable light-emitting display which generates an image.

In preferred embodiments, the pictures may be inserted into the slots with the help of frames or transparent templates, which may be similar to a mounted slide, for example. For instance, such frames or transparent templates may provide the user with the information of the necessary picture dimensions to fit neatly into the slot and to insert or remove or exchange the picture. For example, the user may select different photos (e.g., photos of multiple family members, or images of a single person in different positions to simulate a movement as in a flip-book), position the frames or templates onto the photos to establish the required dimensions, cut the photos, insert the photos into the frame(s) or template(s) and slide the latter into the slot between the optical prisms. The frames or templates may comprise a tab or a portion extending beyond the surface of the optical prisms in order to allow them to be easily pulled out for exchange of the pictures.

In a preferred embodiment, the display structure is a four-sided display structure, which enables the picture(s) and/or light-emitting display(s) contained in the slots to be viewed either upon rotation around a center axis (axis of symmetry of order 4) of the cube-like shape or upon movement of the observer around the display structure.

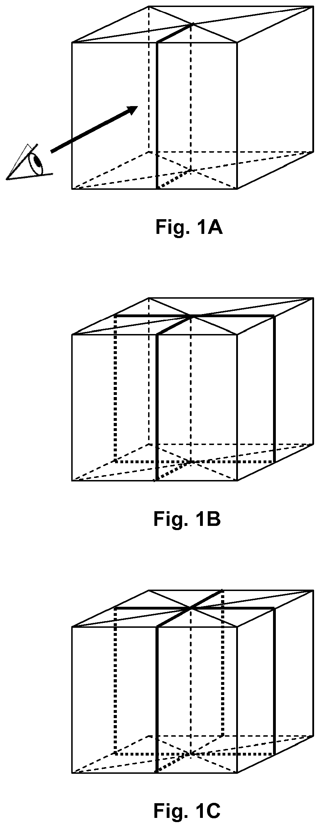

The number of substantially triangular optical prisms comprised in the multi-image display structure of the present invention is not particularly limited as long as it enables a cube-like arrangement, wherein at least one slot between inward-facing quadrangular surfaces of the optical prisms is perpendicular to a side face of the cube-like shape. Figures 1A to 1C illustrate how exemplary cube-like arrangements may be achieved by joining five (Fig. 1A), seven (Fig. 1B) or eight (Fig. 1C) substantially triangular optical prisms at their quadrangular faces, while forming at least one slot (thick lined) which is perpendicular to a side face (i.e. visible display face). Depending on the desired visual effects and the number and size of pictures or number of light-emitting displays to be presented, preferred embodiments of the multi-image display structure of the present invention may comprise 5 to 32, further preferably 5 to 16 substantially triangular optical prisms.

In the display structure of the present invention, one or more picture(s) and/or light-emitting display(s) are independently provided in a plurality of slots. Preferably, however, said plurality of slots comprises the perpendicular slot(s) and further preferably all slots. Namely, the presence of picture(s) and/or light-emitting display(s) in the slots perpendicular to a side face has the effect that depending on the angle from which said side face is viewed, a reflected image of the picture and/or light-emitting display(s) appears or disappears. In case two pictures (or displays) are provided in the slot back-to-back, the variation of the viewing angle causes the reflected image of the first picture to disappear and the reflected image of the second picture to appear.

In one particularly preferred example from the viewpoint of simple manufacturing and favourable visual appeal, the multi-image display structure of the present invention comprises eight substantially triangular optical prisms and one perpendicular slot per side face.

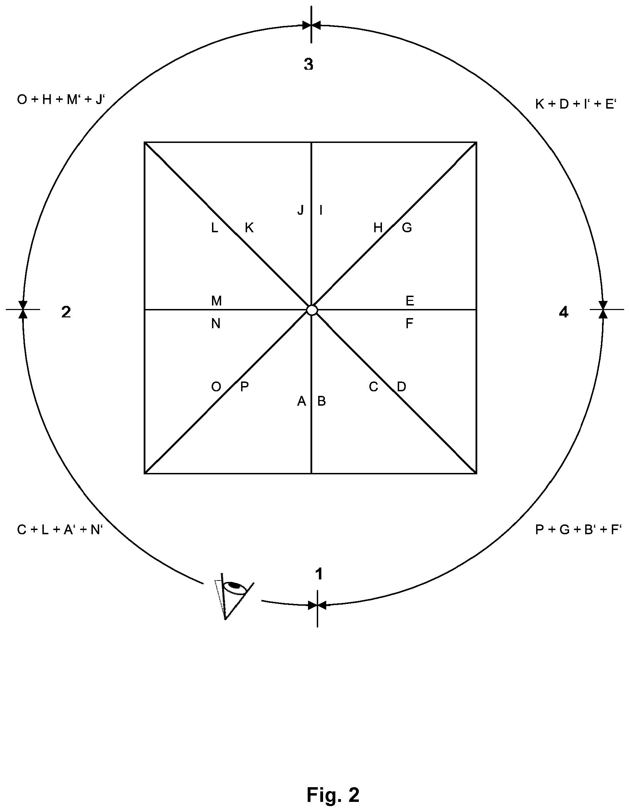

An exemplary cube-like shape comprising eight right-triangular optical prisms is illustrated in Fig. 2 and comprises 8 slots into which a total of 16 identical or different picture(s) and/or light-emitting display(s) A to P may be inserted back-to-back. Upon rotation of the display structure around the center axis or upon movement of the observer around the display structure up to 4 images are visible simultaneously. For example, when moving in clockwise direction from position 1 to position 4, the observer will first mainly see picture C and a reflected image A' (mirror reflection of picture A at surface P), to which picture L and the reflected image N' (mirror reflection of picture N at surface O) are added until mainly L and N' are seen. At position 2, picture L and image N' disappear, while picture O and the reflected image M' (mirror reflection of picture M at surface L) appear. When moving further to position 3, the picture H and the reflected image J' mainly become visible. At position 3, picture H and image J' disappear, while picture K and the reflected image I' (mirror reflection of picture I at surface H) appear, and so on. It is to be noted that the positions 1 to 4 shown in Fig. 2 are roughly estimated and in many cases not clearly defined. For example, there may be a region where pictures and images are perceived as to overlap.

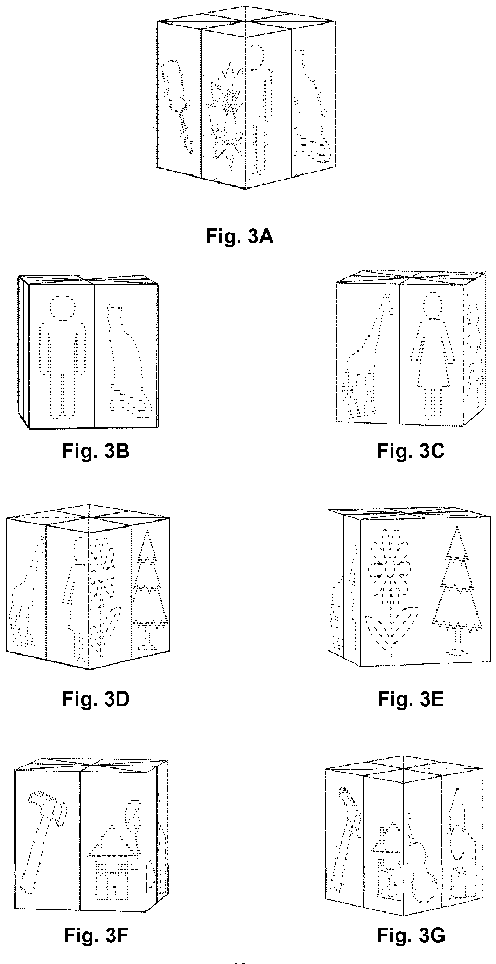

A further illustration of the optical effects in case of a cube-like shape comprising eight right-triangular optical prisms is given by means of Figures 3A to 3G. Fig. 3A shows a diagonal view of an exemplary display structure. Fig. 3B shows a front view of the cube after slight rotation. Upon further rotation of the cube, the images switch due to the prism/mirror effect (Fig. 3C). Fig. 3D shows that as the cube is rotated further, more images appear on the right. In the position of Fig. 3E, the previous images are still displayed. Fig. 3F shows the cube rotated slightly further, which again causes the images to change and switch. Fig. 3G shows the appearance of further images upon further rotation of the cube.

In general, the prisms are formed of light-transmitting materials. In a preferred embodiment, the prisms are comprised of a first light-transmitting material having a first refractive index and an optional fluid second light-transmitting material having a second refractive index, the difference between the first and second refractive indices being 0.12 or less, preferably 0.06 or less, further preferably 0.04 or less. Typically, refractive indices are measured by means of a refractometer at a wavelength of 589.29 nm and at 0°C and 1 atm (gases), 20°C (liquids) and at room temperature (solids). The first refractive index is preferably in a range of 1.3 to 1.6, further preferably in a range of 1.39 to 1.50. As examples of the first light-transmitting material, glass, resin (e.g. molding resin); polymers and glass/polymer laminates (e.g. safety glasses) may be mentioned, which may be appropriately selected by the skilled artisan depending on the location and purpose of the display structure. As a preferred polymer material, poly(methyl methacrylate) (PMMA) may be mentioned. For display devices with relatively large dimensions, glass/polymer laminates may be preferable in view of their stability. While not being limited thereto, preferred glass/polymer laminates include glass/polyvinyl butyral (PVB)/glass or glass/ethylene-vinyl acetate (EVA)/glass laminates.

For the manufacture of multi-image display structures with relatively small dimensions (such as those having an edge length of about 20 cm or less; e.g., for key rings, photo holders, promotional giveaways and similar applications), it may be preferable to produce the prisms or the entire display structure (e.g. by cutting the slots appropriately) from solid first light-transmitting material.

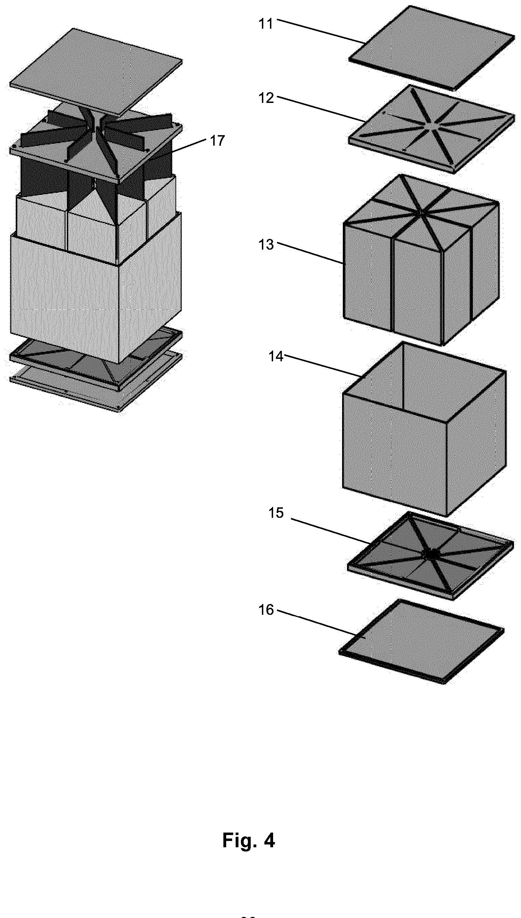

An exemplary assembly comprising solid prisms is illustrated in Fig. 4. The assembly comprises an optional transparent protective cover (14) over the side faces of the cube-like shape and cover plates (11) and (16) on the top and/or bottom faces. The cover plates may be opaque for a favourable visual appearance. It is preferred that at least the cover plate is translucent in order to allow sunlight or light from ceiling lamps to pass through the cube-like structure for improved image brightness. The triangular prism arrangement (13) is inserted into the cover (14) and pictures (17) are mounted into the slots between the triangular prisms and held in position by an upper mask (12) and a lower mask (15) provided between the prism arrangement and the cover plates (11) and (16). It is understood that the prisms may be alternatively held in position and affixed to each other by means of spacer elements provided between the prism walls (not depicted in Fig. 4).

For larger dimensions, however, it is preferable from the viewpoint of cost-effectiveness to use the first light-transmitting material as a tank into which a fluid second light-transmitting material is filled. The second light-transmitting material is preferably a liquid, such as water, aqueous solutions, oil (e.g. mineral oil, silicone oil) or glycerol, specifically glycerol (propane-1,2,3-triol). The second light-transmitting material may include further additives (such as coloring agents, antifreeze-agents, and the like) as long as they do not impart the function of the device.

Glycerol is particularly preferable as a second light-transmitting material (especially in a purity of 98% or higher, such as 99% or higher) since it is environmentally friendly, inexpensive and exhibits excellent optical properties. Specifically, it produces less streaks and less bubbles when compared to oily fluids, and its refractive index matches that of PMMA and glass, which results in a favourable optical clarity.

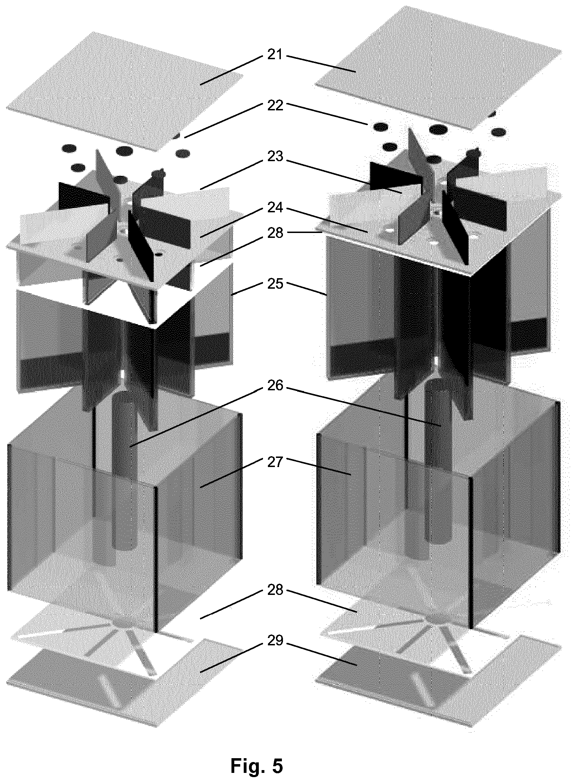

One exemplary assembly of a display structure using a fluid second light-transmitting material is illustrated in Fig. 5. The assembly comprises a bottom plate (29) onto which a lower mask (28) is mounted. The bottom plate (29) and the cover plate (21) each comprise a plurality of grooves (which may be sealed), into which double-walled picture/display holders (25) are inserted, stabilized by the lower mask (28) and an upper mask (28') which may be slidable vertically. A tank for the liquid second light-transmitting material is prepared by affixing a glass cover (27) (i.e. the first light-transmitting material) to the bottom plate (29) in a waterproof manner. Pictures or light-emitting displays (23) may be inserted into the picture/display holders (25). An additional mask (24) may be provided with filling apertures, through which the liquid second light-transmitting material may be filled into the tank, and corresponding lids (22). In the center of the cube-like structure, a cylindrical volume compensation chamber (26) is provided. As is evident from the display structure shown in Fig. 5, the display structure of the present invention is not necessarily formed by assembling of separate prismatic elements, but may also be manufactured by formation of prismatic compartments, simply by inserting picture/display holders which divide the cubic/cuboid structure into triangular optical prisms. As is understood, however, prism-shaped tanks may be manufactured beforehand and then assembled to the cube-like structure.

In general, the slots comprise a third light-transmitting material having a third refractive index, which may be in the range of 1.000 and 1.002, for example. Preferably, the third light-transmitting material is a gas, further preferably air.

In a preferred embodiment, the light transmitting material has a first refractive index and the light reflecting layer has a third refractive index different to the first refractive index, and the difference in the first and third refractive indices and the oblique angle are sufficient to cause the images to be substantially reflected by the light reflecting layer.

In a generally preferred embodiment, the prisms are comprised of a first light-transmitting material having a first refractive index and an optional fluid second light-transmitting material having a second refractive index, the difference between the first and second refractive indices being 0.12 or less, preferably 0.06 or less, further preferably 0.06 or less; wherein the slot(s) comprise(s) a third light-transmitting material having a third refractive index; and wherein the oblique angle between a reflective prism surface and the picture(s) and/or the light-emitting display(s), and the difference between the first and third refractive indices are sufficient to cause substantial reflection of the image originating from the picture(s) and/or the light-emitting display(s).

In the case where display structure comprises the fluid second light-transmitting material, the latter material may have an undesirably high thermal expansion coefficient (as glycerol, for example), which may cause problems when the display location is subject to extensive temperature changes (e.g., in outdoor installations). Commonly, this problem is solved by setting the dimension of the tank according to the calculated maximum volume of the fluid light-transmitting material under the expected conditions. However, this approach is not satisfactory in terms of the visual appearance, particularly since relatively large voids and/or bubbles may be present in the tank, which must be hidden behind relatively opaque cover lids or similar measures and which may introduce undesirable reflections in the upper part of the prism arrangement. A further alternative is the implementation of a heating/cooling element configured to regulate the temperature of fluid light-transmitting material at a constant value, which is relatively energy-consuming, however.

Therefore, a preferred display structure of the present invention additionally comprises a volume compensation chamber, preferably on a non-display face of the display structure or as a cylindrical element in the center of the structure (as shown in Fig. 5), comprising second light-transmitting material in fluid communication with the second light-transmitting material in the tank (e.g. via holes in the cylindical element).

Further preferably, the volume compensation chamber comprises a cylindrical body; a piston movably mounted into the cylindrical body via a sealing ring; and an aperture plate.

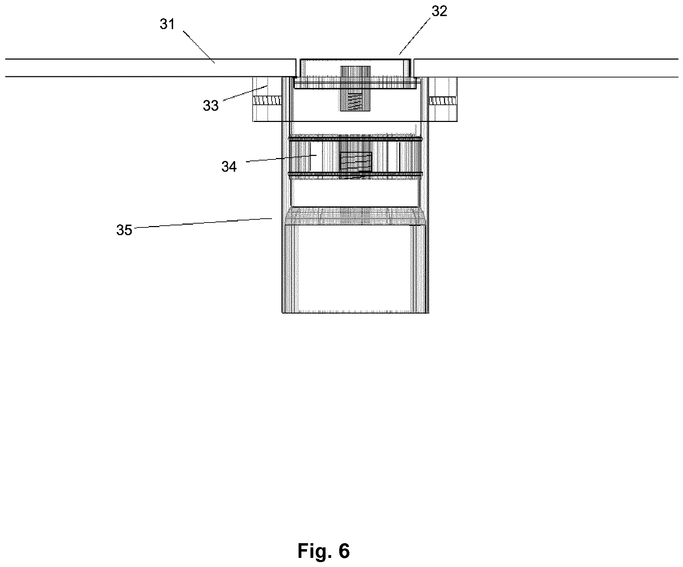

A specifically preferred example thereof is illustrated in Fig. 6. Herein, a cylindrical body (35) is mounted at the underside of the tank through a mounting flange (33). A piston (34) with a sealing ring is movably mounted into the cylindrical body (35). In addition, an aperture plate (32) is affixed to the cylindrical body, its upper surface being positioned flush with the bottom surface of the tank (31). Advantageously, the illustrated volume compensation chamber represents an effective and visually appealing solution to volume compensation without requiring heating/cooling devices and simultaneously functions as a filling port for the liquid light-transmitting material.

The means of connecting and mounting each of the components of the multi-image display structure according to the present invention are generally not limited and may include mechanical (incl. clips, screws etc.) and chemical (e.g., through adhesives) connection means.

Another preferred embodiment of the present invention comprises one or more means selected from a light assembly arranged to illuminate the prism arrangement, a motor for rotatively moving the prism arrangement, and a heating/cooling element; and a power source electrically connected to said means. The power source may include, but is not limited to batteries (e.g., a secondary battery, an organic thin film battery) and photovoltaic devices.

In a second embodiment, the present invention relates to a kit for making a multi-image display structure, wherein the kit comprises: a plurality of substantially triangular optical prisms arranged in a cube-like shape, the triangular prism surfaces being plane-parallel to the top and bottom surfaces of the cube-like shape; slots configured as receptacles for pictures and/or a light-emitting displays between inward-facing quadrangular surfaces of the optical prisms, wherein at least one slot is perpendicular to a side face of the cube-like shape. The kit may comprise frames or transparent templates as described above with the first embodiment. It will be understood that the kit of the second embodiment may be configured in accordance with the description of the first embodiment and serves the purpose of displaying individual pictures (e.g. paintings, drawings, artworks, prints or photographs; personal or corporate) and moved images. For example, the kit may function as a picture holder for personal photos or comprise slots that are suitably dimensioned to incorporate commercially available light-emitting displays, tablet devices or mobile phones.

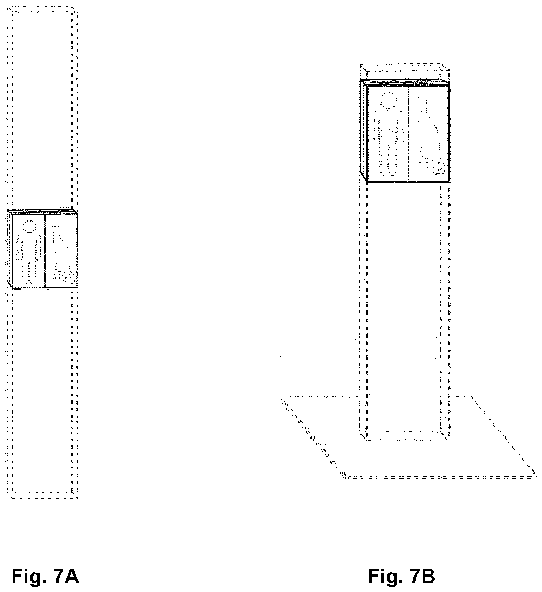

In a third embodiment, the present invention relates to an advertising sign comprising the display structure according to the first embodiment or the kit according to the second embodiment. The advertising sign may be provided with an optional mounting stand or ceiling support. For example, as is shown in Figure 7A and 7B, the advertising sign according to a third embodiment may incorporate pillar-shaped mounting members or stands, which will be typically opaque and may be formed, for example, from wood or plastics material. It will be understood that an advertising sign according to the present invention may comprise a plurality of display structure according to the first embodiment, which may be mounted vertically above each other in a single pillar-shaped mount in analogy to that of Fig. 7A or 7B. The advertising sign can be used to provide a number of different images and may be positioned, for example, at a doorway which serves as an entrance and an exit to a building, to display a first image appropriate for someone entering the building on one side and an image appropriate to someone leaving the building on the other side, while displaying further information on the other side faces.

In a fourth embodiment, the present invention relates to a presentation or entertainment article comprising the display structure according to the first embodiment or the kit according to the second embodiment. Presentation articles include promotional items, which may include, but are not limited to key rings, souvenirs and corporate giveaways. Entertainment articles may include, but are not limited to toys and/or puzzles.

Once given the above disclosure, many other features, modifications, and improvements will become apparent to the skilled artisan.

It will be appreciated that the present invention may employ any of the preferred features specified above with respect to the description of any of the above-described embodiments, and that the preferred features may be combined in any combination, except for combinations where at least some of the features are mutually exclusive.

### Reference Signs

- 11 / 21 -: top cover plate
- 12 / 24 -: top mask
- 13 -: prism arrangement
- 14 / 27-: transparent protective cover
- 15 / 28 -: bottom mask
- 28' -: upper mask
- 16 / 29 -: bottom plate
- 17 / 23 -: pictures/displays
- 22 -: aperture lids
- 25 -: picture/display holders
- 26 -: volume compensation chamber/cylinder
- 31 -: bottom tank surface
- 32 -: aperture plate
- 33 -: mounting flange
- 34 -: piston
- 35 -: cylindrical body

## Claims

1. A multi-image display structure comprising:
a plurality of substantially triangular optical prisms (13) arranged in a cube-like shape, the triangular prism surfaces being plane-parallel to the top and bottom surfaces of the cube-like shape; **characterised in that** it further comprises
slots between inward-facing quadrangular surfaces of the optical prisms, wherein at least one slot is perpendicular to a side face of the cube-like shape; and
one or more picture(s) and/or light-emitting display(s) (17, 23) independently provided in a plurality of said slots.

2. The multi-image display structure according to claim 1, wherein the display structure is a four sided display structure.

3. The multi-image display structure according to claim 1 or 2, comprising 5 to 32, preferably 5 to 16, further preferably 8 substantially triangular optical prisms arranged in a cube-like shape.

4. The multi-image display structure according to any of claims 1 to 3, wherein the substantially triangular optical prisms are right-triangular prisms, and wherein the hypotenuse faces of the right-triangular prisms are preferably positioned face-to-face in the prism arrangement (13).

5. The multi-image display structure according to any of claims 1 to 4, wherein one or more picture(s) and/or light-emitting display(s) (17, 23) are provided in the perpendicular slot and preferably in all slots.

6. The multi-image display structure according to any of claims 1 to 5, wherein the picture is a painting, an artwork or a photograph, and/or wherein the light-emitting display is an LCD or OLED.

7. The multi-image display structure according to any of claims 1 to 6,
wherein the prisms are comprised of a first light-transmitting material having a first refractive index and an optional fluid second light-transmitting material having a second refractive index, the difference between the first and second refractive indices being 0.12 or less, preferably 0.06 or less, further preferably 0.03 or less;
wherein the slot(s) comprise(s) a third light-transmitting material having a third refractive index; and
wherein the oblique angle between a reflective prism surface and the picture(s) and/or the light-emitting display(s), and the difference between the first and third refractive indices are sufficient to cause substantial reflection of the image originating from the picture(s) and/or the light-emitting display(s).

8. The multi-image display structure according to claim 7,
wherein the first light-transmitting material is a solid, preferably a glass or a polymer, further preferably poly(methyl methacrylate);
wherein the optional fluid second light-transmitting material is a liquid, preferably a mineral oil or glycerol, particularly preferably glycerol; and/or
wherein the third light-transmitting material is a gas, preferably air.

9. The multi-image display structure according to claims 7 or 8, comprising:
the fluid second light-transmitting material in a tank formed of the first light-transmitting material;
a volume compensation chamber (26), preferably on a non-display face of the cube-like shape, comprising second light-transmitting material in fluid communication with the second light-transmitting material in the tank.

10. The multi-image display structure according to claim 9, wherein the volume compensation chamber (26) comprises a cylindrical body (35); a piston (34) movably mounted into the cylindrical body via a sealing ring; and an aperture plate (32).

11. The multi-image display structure according to any of claims 1 to 10, further comprising one or more means selected from a light assembly arranged to illuminate the prism arrangement, a motor for rotatively moving the prism arrangement, and a heating/cooling element; and a power source electrically connected to said means.

12. The multi-image display structure according to any of claims 1 to 11, further comprising a transparent protective cover (14, 27) over the side faces of the cube-like shape and an optional cover plate on the top and/or bottom faces (11, 21, 16, 29), wherein the cover plate on the top face (11, 21) is preferably translucent.

13. A kit for making a multi-image display structure according to claims 1 to 12, wherein the kit comprises:
a plurality of substantially triangular optical prisms arranged in a cube-like shape, the triangular prism surfaces being plane-parallel to the top and bottom surfaces of the cube-like shape;
slots configured as receptacles for pictures and/or a light-emitting displays (17, 23) between inward-facing quadrangular surfaces of the optical prisms, wherein at least one slot is perpendicular to a side face of the cube-like shape.

14. An advertising sign comprising the display structure according to any of claims 1 to 12 or the kit according to claim 13 and an optional mounting stand.

15. A presentation or entertainment article comprising the display structure according to any of claims 1 to 12 or the kit according to claim 13.

## Patentansprüche

1. Mehrfachbild-Anzeigestruktur, umfassend:
eine Vielzahl von im Wesentlichen dreieckigen optischen Prismen (13), die in einer würfelförmigen Form angeordnet sind, wobei die dreieckigen Prismenflächen planparallel zu den oberen und unteren Flächen der würfelförmigen Form sind;
Schlitze zwischen nach innen gerichteten viereckigen Oberflächen der optischen Prismen, wobei mindestens ein Schlitz senkrecht zu einer Seitenfläche der würfelförmigen Form angeordnet ist; und
ein oder mehrere Bilder und/oder Licht emittierende Anzeigen (17, 23), die unabhängig voneinander in mehreren der Schlitze bereitgestellt sind.

2. Mehrfachbild-Anzeigestruktur nach Anspruch 1, wobei die Anzeigestruktur eine vierseitige Anzeigestruktur ist.

3. Mehrfachbild-Anzeigestruktur nach Anspruch 1 oder 2, umfassend 5 bis 32, vorzugsweise 5 bis 16, ferner bevorzugt 8 im Wesentlichen dreieckige optische Prismen, die in einer würfelförmigen Form angeordnet sind.

4. Mehrfachbild-Anzeigestruktur nach einem der Ansprüche 1 bis 3, wobei die im Wesentlichen dreieckigen optischen Prismen rechtwinklige Dreiecksprismen sind und wobei ich in der Prismenanordnung (13) die Hypotenusenflächen der rechtwinkligen dreieckigen Prismen vorzugsweise gegenüberstehen.

5. Mehrfachbild-Anzeigestruktur nach einem der Ansprüche 1 bis 4, wobei ein oder mehrere Bilder und/oder Licht emittierende Anzeigen (17, 23) in dem senkrechten Schlitz und vorzugsweise in allen Schlitzen vorgesehen sind.

6. Mehrfachbild-Anzeigestruktur nach einem der Ansprüche 1 bis 5, wobei das Bild ein Gemälde, ein Kunstwerk oder eine Fotografie ist und/oder wobei die Licht emittierende Anzeige ein LCD oder eine OLED ist.

7. Mehrfachbild-Anzeigestruktur nach einem der Ansprüche 1 bis 6,
wobei die Prismen ein erstes lichtdurchlässiges Material mit einem ersten Brechungsindex und ein optionales zweites lichtdurchlässiges Fluidmaterial mit einem zweiten Brechungsindex umfassen, wobei die Differenz zwischen dem ersten und dem zweiten Brechungsindex 0,12 oder weniger beträgt, vorzugsweise 0,06 oder weniger, und ferner bevorzugt 0,03 oder weniger;
wobei der Schlitz (die Schlitze) ein drittes lichtdurchlässiges Material mit einem dritten Brechungsindex umfassen; und
wobei der schräge Winkel zwischen einer reflektierenden Prismenoberfläche und dem Bild (den Bildern) und/oder der Licht emittierenden Anzeige(n) und der Unterschied zwischen dem ersten und dem dritten Brechungsindex ausreichen, um eine wesentliche Reflexion des Abbilds zu bewirken, welches von dem Bild (den Bildern) und/oder der (den) Licht emittierenden Anzeige(n) stammt.

8. Mehrfachbild-Anzeigestruktur nach Anspruch 7,
wobei das erste lichtdurchlässige Material ein Feststoff ist, vorzugsweise ein Glas oder ein Polymer, ferner bevorzugt Poly(methylmethacrylat);
wobei das optionale zweite lichtdurchlässige Fluidmaterial eine Flüssigkeit ist, vorzugsweise ein Mineralöl oder Glycerin, besonders bevorzugt Glycerin; und/oder
wobei das dritte lichtdurchlässige Material ein Gas ist, vorzugsweise Luft.

9. Mehrfachbild-Anzeigestruktur nach Anspruch 7 oder 8, umfassend:
das zweite lichtdurchlässige Fluidmaterial in einem Tank, der aus dem ersten lichtdurchlässigen Material gebildet ist;
eine Volumenkompensationskammer (26), vorzugsweise auf einer nicht angezeigten Fläche der würfelförmigen Form, umfassend ein zweites lichtdurchlässiges Material in Fluidverbindung mit dem zweiten lichtdurchlässigen Material in dem Tank.

10. Mehrfachbild-Anzeigestruktur nach Anspruch 9, wobei die Volumenkompensationskammer (26) einen zylindrischen Körper (35) umfasst; einen Kolben (34), der beweglich über einen Dichtring in den zylindrischen Körper eingebaut ist; und eine Aperturplatte (32).

11. Mehrfachbild-Anzeigestruktur nach einem der Ansprüche 1 bis 10, ferner umfassend ein oder mehrere Mittel ausgewählt aus einer Beleuchtungsanordnung, die angeordnet ist, um die Prismenanordnung zu beleuchten, einem Motor zum rotierenden Bewegen der Prismenanordnung und einem Heiz-/Kühlelement; und eine Stromquelle, die elektrisch mit den Mitteln verbunden ist.

12. Mehrfachbild-Anzeigestruktur nach einem der Ansprüche 1 bis 11, ferner umfassend eine transparente Schutzabdeckung (14, 27) über den Seitenflächen der würfelförmigen Form und eine optionale Abdeckplatte auf den Ober- und/oder Unterseiten (11, 21, 16, 29), wobei die Abdeckplatte auf der Oberseite (11, 21) vorzugsweise lichtdurchlässig ist.

13. Bausatz zur Herstellung einer Mehrfachbild-Anzeigestruktur, wobei der Bausatz umfasst:
eine Vielzahl von im Wesentlichen dreieckigen optischen Prismen, die in einer würfelförmigen Form angeordnet sind, wobei die dreieckigen Prismenflächen planparallel zu den oberen und unteren Oberflächen der würfelförmigen Form angeordnet sind;
Schlitze, die als Aufnahme für Bilder und/oder eine lichtemittierende Anzeige (17, 23) zwischen nach innen gerichteten viereckigen Oberflächen der optischen Prismen konfiguriert sind, wobei mindestens ein Schlitz senkrecht zu einer Seitenfläche der würfelförmigen Form angeordnet ist.

14. Werbeschild mit der Anzeigestruktur nach einem der Ansprüche 1 bis 12 oder dem Bausatz nach Anspruch 13 und einem optionalen Montageständer.

15. Präsentations- oder Unterhaltungsartikel, umfassend die Anzeigestruktur nach einem der Ansprüche 1 bis 12 oder den Bausatz nach Anspruch 13.

## Revendications

1. Structure d'affichage multi-image comprenant:
une pluralité de prismes optiques sensiblement triangulaires (13) disposés en forme de cube, les surfaces de prisme triangulaires étant plan-parallèles aux surfaces supérieure et inférieure de la forme cubique;
des fentes entre les surfaces quadrangulaires tournées vers l'intérieur des prismes optiques, dans lesquelles au moins une fente est perpendiculaire à une face latérale de la forme cubique; et
une ou plusieurs image(s) et/ou affichage(s) électroluminescent (17, 23) disposés indépendamment dans une pluralité desdites fentes.

2. Structure d'affichage multi-image selon la revendication 1, dans laquelle la structure d'affichage est une structure d'affichage à quatre côtés.

3. Structure d'affichage multi-image selon la revendication 1 ou 2, comprenant 5 à 32, de préférence 5 à 16, en outre de préférence 8 prismes optiques sensiblement triangulaires disposés en forme de cube.

4. Structure d'affichage multi-image selon l'une quelconque des revendications 1 à 3, dans laquelle les prismes optiques sensiblement triangulaires sont des prismes triangulaires-rectangulaires, et dans laquelle les faces d'hypoténuse des prismes triangulaires-rectangulaires sont de préférence positionnées face à face dans l'arrangement des prismes (13).

5. Structure d'affichage multi-image selon l'une quelconque des revendications 1 à 4, dans laquelle une ou plusieurs image(s) et/ou affichage(s) électroluminescent (17, 23) sont prévus dans la fente perpendiculaire et de préférence dans tout les fentes.

6. Structure d'affichage multi-image selon l'une quelconque des revendications 1 à 5, dans laquelle l'image est une peinture, une illustration ou une photographie, et/ou dans laquelle l' affichage électroluminescent est un LCD ou OLED.

7. Structure d'affichage multi-image selon l'une quelconque des revendications 1 à 6,
dans laquelle les prismes sont constitués d'un premier matériau transmettant la lumière ayant un premier indice de réfraction et d'un deuxième matériau fluide optionnel transmettant la lumière ayant un deuxième indice de réfraction, la différence entre les premier et deuxième indices de réfraction étant de 0,12 ou moins, de préférence 0,06 ou moins, de préférence encore 0,03 ou moins;
dans laquelle la ou les fentes comprennent un troisième matériau transmettant la lumière ayant un troisième indice de réfraction; et
dans laquelle l'angle oblique entre une surface de prisme réfléchissant et la ou les images et/ou le ou les écrans électroluminescents, et la différence entre les premier et troisième indices de réfraction sont suffisants pour provoquer une réflexion substantielle de l'image provenant de l'image(s) et/ou le(s) affichage(s) électroluminescent(s).

8. Structure d'affichage multi-image selon la revendication 7,
dans laquelle le premier matériau transmettant la lumière est un solide, de préférence un verre ou un polymère, de préférence encore du poly (méthacrylate de méthyle);
dans laquelle le deuxième matériau fluide optionnel transmettant la lumière est un liquide, de préférence une huile minérale ou du glycérol, de préférence encore du glycérol; et/ou
dans laquelle le troisième matériau transmettant la lumière est un gaz, de préférence de l'air.

9. Structure d'affichage multi-image selon les revendications 7 ou 8, comprenant:
le deuxième matériau fluide transmettant la lumière dans un réservoir formé du premier matériau transmettant la lumière;
une chambre de compensation de volume (26), de préférence sur une face non d'affichage de la forme cubique, comprenant un second matériau transmettant la lumière en communication fluidique avec le second matériau transmettant la lumière dans le réservoir.

10. Structure d'affichage multi-image selon la revendication 9, dans laquelle la chambre de compensation de volume (26) comprend un corps cylindrique (35); un piston (34) monté de manière mobile dans le corps cylindrique via une bague d'étanchéité; et une plaque d'ouverture (32).

11. Structure d'affichage multi-image selon l'une quelconque des revendications 1 à 10, comprenant en outre un ou plusieurs moyens choisis parmi un ensemble de lumière agencé pour éclairer l'arrangement des prismes, un moteur pour déplacer en rotation l'arrangement des prismes, et un élément de chauffage/refroidissement; et une source d'énergie connectée électriquement auxdits moyens.

12. Structure d'affichage multi-image selon l'une quelconque des revendications 1 à 11, comprenant en outre un couvercle de protection transparent (14, 27) sur les faces latérales de la forme cubique et une plaque de couverture facultative sur le dessus et/ou le dessous. des faces (11, 21, 16, 29), dans lesquelles la plaque de recouvrement sur la face supérieure (11, 21) est de préférence translucide.

13. Kit pour fabriquer une structure d'affichage multi-image, dans lequel le kit comprend:
une pluralité de prismes optiques sensiblement triangulaires disposés en forme de cube, les surfaces de prisme triangulaires étant plan-parallèles aux surfaces supérieure et inférieure de la forme cubique;
des fentes configurées comme des réceptacles pour des images et/ou des affichages électroluminescents (17, 23) entre les surfaces quadrangulaires tournées vers l'intérieur des prismes optiques, dans lesquelles au moins une fente est perpendiculaire à une face latérale de la forme cubique.

14. Enseigne publicitaire comprenant la structure d'affichage selon l'une quelconque des revendications 1 à 12 ou le kit selon la revendication 13 et un support de montage optionnel.

15. Article de présentation ou de divertissement comprenant la structure d'affichage selon l'une quelconque des revendications 1 à 12 ou le kit selon la revendication 13.
